# EUROPEAN PATENT APPLICATION

(11) **EP 4 685 896 A1**
(43) Date of publication of application: **28.01.2026**
(21) Application number: 25179844.3
(22) Date of filing: 30.05.2025
(51) Int. Cl.: H01M 10/04, H01M 10/0587, H01M 50/59

(54) **ELECTRODE ASSEMBLY AND BUTTON BATTERY HAVING THE SAME**

(30) Priority: 24.07.2024 KR 20240098144
(71) Applicant: SAMSUNG SDI CO., LTD., Yongin-si, Gyeonggi-do 17084 (KR)
(72) Inventor: CHO, Cheolhyeon, 17084 Yongin-si, Gyeonggi-do (KR); KIM, Yoonjeong, 17084 Yongin-si, Gyeonggi-do (KR); HONG, Bomin, 17084 Yongin-si, Gyeonggi-do (KR); KIM, Yoonbin, 17084 Yongin-si, Gyeonggi-do (KR)
(74) Representative: Gulde & Partner

(57) **Abstract**

An electrode assembly (100) includes: a first electrode (110); a second electrode (120) on the first electrode (110) in a first direction (X); and a separator (130) between the first electrode (110) and the second electrode (120). The first electrode (110), the second electrode (120), and the separator (130) are wound in a jelly roll shape about a winding axis (WA) extending in a second direction (Y) intersecting the first direction (X). The first electrode (110) has a first front uncoated region (111) adjacent to the winding axis (WA) in the first direction (X) and extending around the winding axis (WA) by at least two turns.

## Description

### BACKGROUND

### 1. Field

Aspects of embodiments of the present disclosure relate to an electrode assembly and a button battery including the same.

### 2. Description of the Related Art

Generally, a rechargeable battery is a battery that is designed to be repeatedly charged and discharged.

Recently, as demand for wearable devices, such as headphones, earphones, smartwatches, and body-attached medical devices using wireless communication protocols, such as Bluetooth^{®}, increases, ultra-small rechargeable batteries in form of button batteries (or button cells) to be installed in the wearable devices is increasing.

Conventional button batteries include an electrode assembly wound in a form of a jelly roll.

For stability evaluation, conventional button batteries are subjected to a compression evaluation in which the charged button batteries are compressed in the thickness direction until the pressure applied to the button battery reaches a reference (or predetermined) pressure or the button battery is deformed by a reference (or predetermined) ratio in the diameter direction.

However, conventional button batteries can experience an electrode assembly short circuit in which the positive electrode and the negative electrode of the electrode assembly short circuit during compression testing, resulting in a fire or explosion.

### SUMMARY

Embodiments of the present disclosure are directed an electrode assembly and a button battery including the same in which an occurrence of a flame or explosion is prevented during a compression test that compresses the button battery in a thickness direction thereof for stability evaluation of the button battery.

According to an embodiment, an electrode assembly includes a first electrode; a second electrode on the first electrode in a first direction; and a separator between the first electrode and the second electrode. The first electrode, the second electrode, and the separator are wound in a jelly roll shape about (or centered on) a winding axis extending in a second direction intersecting the first direction, and the first electrode has a first front uncoated region that is adjacent to the winding axis in the first direction and extends around (or surrounds) the winding axis by at least two turns.

The second electrode may have a second front uncoated region that may be adjacent to the first front uncoated region in the first direction and may extend around (or surround) the first front uncoated region preferably by at least two turns.

The first front uncoated region may protrude beyond (or relative to) the second front uncoated region in the second direction.

The separator may be between the first front uncoated region and the second front uncoated region in the first direction.

The separator may protrude in the second direction beyond (or relative to) the first front uncoated region.

The first electrode may have a first coated region that may extend from the first front uncoated region and that may be adjacent to the second front uncoated region in the first direction.

The first coated region may include a negative active material.

The second electrode may have a second coated region that may extend from the second front uncoated region and that may be adjacent to the first coated region in the first direction.

The second coated region may include a positive active material.

The positive active material may include nickel cobalt aluminum (NCA).

A winding core space may be present on the winding axis, may be adjacent to the first front uncoated region, and may be surrounded (e.g., along its periphery) by the first front uncoated region.

A length of the winding core space may be in a range of 1.8 mm to 2.4 mm in the first direction.

A diameter of the electrode assembly in the first direction may be greater than or equal to a height of the electrode assembly in the second direction.

According to another embodiment, a button battery may include an electrode assembly including a first electrode, a second electrode, and a separator between the first electrode and the second electrode in a first direction, the first electrode, the second electrode, and the separator being wound in a jelly roll shape about/along (or centered on) a winding axis extending in a second direction intersecting the first direction; a case connected to the first electrode, accommodating (or housing) the electrode assembly, and having an opening exposing the electrode assembly; a cap plate covering an outer region of the opening in the case and having an opening (e.g., a penetration hole) exposing a central region of the opening in the case; and a terminal plate insulated from the cap plate, connected to the second electrode, and covering the opening (e.g., the penetration hole) in the cap plate. The first electrode may have a first front uncoated region adjacent to the winding axis in the first direction and may extend around (or surround) the winding axis by at least two turns.

The second electrode may have a second front uncoated region that may be adjacent to the first front uncoated region in the first direction and may extend around (or surround) the first front uncoated region preferably by at least two turns.

The first electrode may have a first coated region that may extend from the first front uncoated region and that may be adjacent to the second front uncoated region in the first direction.

The second electrode may have a second coated region that may extend from the second front uncoated region and that may be adjacent to the first coated region in the first direction.

The electrode assembly may have a winding core space on the winding axis, may be adjacent to the first front uncoated region, and may be surrounded (e.g., along its periphery) by the first front uncoated region.

A length of the winding core space may be in a range of 15% to 20% of a diameter of the button battery in the first direction.

A diameter of the button battery in the first direction may be greater than or equal to a height of the button battery in the second direction.

According to embodiments of the present disclosure, an electrode assembly and a button battery including the same are provided in which an occurrence of a flame or explosion is mitigated or prevented during a compression test that compresses the button battery in the thickness direction for the stability evaluation of the button battery.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 is a perspective view of a button battery according to an embodiment.
FIG. 2 is a cross-sectional view taken along the line II-II in FIG. 1.
FIG. 3 is a top plan view of an electrode assembly of a button battery according to an embodiment.
FIG. 4 is a cross-sectional view taken along the line IV-IV in FIG. 3.
FIG. 5 is a cross-sectional view taken along the line V-V in FIG. 3.
FIG. 6 is a top plan view illustrating an electrode assembly of a button battery according to an embodiment during a compression evaluation.
FIG. 7 is a cross-sectional view showing a first point portion shown in FIG. 6.
FIG. 8 is a cross-sectional view showing a second point portion shown in FIG. 6.
FIG. 9 is a table showing compression evaluation results of experimental examples and comparative examples.

### DETAILED DESCRIPTION

The present disclosure will be described more fully hereinafter with reference to the accompanying drawings, in which embodiments of the present disclosure are shown. As those skilled in the art would realize, the described embodiments may be modified in various different ways, all without departing from the scope of the present disclosure as defined by the appended claims.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

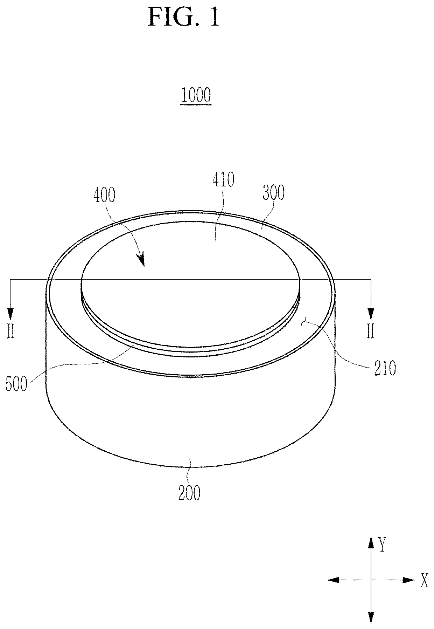

Hereinafter, a button battery according to an embodiment of the present disclosure is described with reference to FIG. 1 to FIG. 5.

A button battery, according to an embodiment, is an ultra-small rechargeable battery, which may be (or may include) a coin cell, but it is not limited thereto, and may include a cylindrical or pin-type battery.

In the illustrated embodiment, the button battery is a thin coin-type or button-shape battery and, in some embodiments, refers to a cell having a ratio of height to diameter of 1 or less, but it is not limited thereto. The button battery is generally cylindrical and has a circular a horizontal cross-section, but the present disclosure is not limited thereto. In other embodiments, the horizontal cross-section may be oval or polygonal. Herein, the diameter may refer to the maximum distance based on the horizontal direction of the button battery, and the height may refer the maximum distance (e.g., a distance from the flat bottom surface to the flat uppermost surface) based on the vertical direction of the button battery.

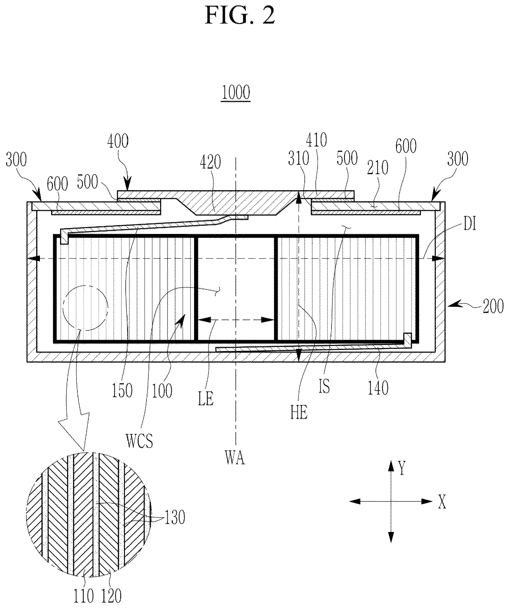

FIG. 1 is a perspective view of a button battery according to an embodiment. FIG. 2 is a cross-sectional view taken along the line II-II in FIG. 1.

Referring to FIG. 1 and FIG. 2, a button battery 1000, according to an embodiment, is a rechargeable battery that is capable of being (e.g., configured to be) repeatedly charged and discharged and includes an electrode assembly 100, a case 200, a cap plate 300, a terminal plate 400, an insulation layer 500, and a washer 600.

The electrode assembly 100 is accommodated in an internal space IS of the case 200. The lower part of the electrode assembly 100 faces the bottom of the case 200, and the upper part of the electrode assembly 100 faces the cap plate 300 and the terminal plate 400 that covers an opening 210 in the case 200. The upper and lower portions of the electrode assembly 100 may have planar shapes that are parallel to each other, but they are not limited thereto.

The electrode assembly 100 includes a first electrode 110, a second electrode 120, a separator 130, a winding core space (WCS), a first electrode tab 140, and a second electrode tab 150.

The first electrode 110 and the second electrode 120 are spaced apart from each other in a first direction (e.g., the X direction), and the separator 130 including an insulating material is positioned between the first electrode 110 and the second electrode 120. The first electrode 110 may be a negative electrode, and the second electrode 120 may be a positive electrode, but they are not limited thereto. In another embodiment, the first electrode 110 may be a positive electrode, and the second electrode 120 may be a negative electrode. Each of the first electrode 110, the second electrode 120, and the separator 130 may include various suitable materials known in the art.

The positive electrode may include a current collector and a positive active material layer formed on the current collector. The positive active material layer includes a positive active material and may further include a binder and/or a conductive material.

As the positive active material, any compound (e.g., a lithiated intercalation compound) that can perform reversible intercalation and deintercalation of lithium may be used. For example, at least one of a composite oxide of lithium and a metal selected from cobalt, manganese, nickel, and a combination thereof may be used.

The composite oxide may be a lithium transition metal composite oxide. Specific examples thereof include lithium nickel oxide, lithium cobalt oxide, lithium manganese oxide, lithium phosphoric acid iron compound, cobalt-free nickel-manganese oxide, or a combination thereof.

As an example, a compound expressed by any of following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li _{(3-f)}Fe₂ PO₄₃ (0≤f≤2); LiₐFePO₄ (0.90≤a≤1.8).

In the above formula, A is Ni, Co, Mn, or combinations thereof; X is Al, Ni, Co, Mn, Cr, Fe, Mg, Sr, V, a rare earth element, or combinations thereof; D is O, F, S, P, or combinations thereof; G is Al, Cr, Mn, Fe, Mg, La, Ce, Sr, V, or combinations thereof; and L1 is Mn, Al or combinations thereof.

The content of the positive active material may be in a range of about 90 wt% to about 99.5 wt% with respect to 100 wt% of the positive active material layer, and the contents of the binder and the conductive material may be in a range of about 0.5 wt% to about 5 wt%, respectively, with respect to 100 wt% of the positive active material layer.

Al may be used as the current collector, but it is not limited thereto.

The negative electrode includes a current collector and a negative active material layer formed on the current collector. The negative active material layer includes a negative active material and may further include a binder and/or a conductive material.

The negative active material includes a material that can reversibly intercalate/deintercalate lithium ions, lithium metal, an alloy of lithium metal, a material that can be doped and dedoped with lithium, or a transition metal oxide.

Materials capable of reversibly intercalating/deintercalating lithium ions include carbon-based negative active materials, such as crystalline carbon, amorphous carbon, or combinations thereof. Examples of crystalline carbon include graphite, such as natural graphite or artificial graphite, and examples of amorphous carbon include soft carbon or hard carbon, mesophase pitch carbide, and fired coke.

As materials that can be doped and dedoped into lithium, Si-based negative active material or Sn-based negative active material may be used. The Si-based negative active material may be silicon, silicon-carbon composite, SiOₓ (0<x≤2), an Si-based alloy, or a combination thereof.

The silicon-carbon composite may be a composite of silicon and amorphous carbon. According to one embodiment, the silicon-carbon composite may be a silicon particle and in a form in which amorphous carbon is coated on the surface of the silicon particle.

The silicon-carbon composite may further include crystalline carbon. For example, the silicon-carbon composite may include a core including crystalline carbon and silicon particles and an amorphous carbon coating layer on the surface of the core.

For example, the negative active material layer may include about 90 wt% to about 99 wt% of the negative active material, about 0.5 wt% to about 5 wt% of the binder, and about 0 wt% to about 5 wt% of the conductive material.

The binder may be a non-aqueous binder, an aqueous binder, a dry binder, or combinations thereof. When an aqueous binder is used as the positive electrode binder, it may further include a cellulose-based compound to provide viscosity.

The positive current collector may be selected from copper foil, nickel foil, stainless steel foil, titanium foil, nickel foam, copper foam, a polymer substrate coated with a conductive metal, and a combination thereof.

Electrolytes for lithium rechargeable batteries include non-aqueous organic solvents and lithium salts.

The non-aqueous organic solvent acts as a medium through which ions involved in the electrochemical reaction of the battery can move.

The non-aqueous organic solvent may be a carbonate solvent, an ester solvent, an ether solvent, a ketone solvent, an alcohol solvent, an aprotic solvent, or a combination thereof, and may be used alone or as a mixture of two or more types.

Additionally, when using a carbonate solvent, cyclic carbonate and linear carbonate may be mixed and used.

Depending on the type of the lithium rechargeable battery, a separator may be provided between the negative electrode and the positive electrode. The separator may be made of polyethylene, polypropylene, polyvinylidene fluoride, or a multilayer of two or more layers of these.

The separator may include a porous substrate and a coating layer including an organic material, an inorganic material or a combination thereof positioned on one or both surfaces of the porous substrate.

The organic material may include polyvinylidene fluoride-based polymers or (meth)acryl-based polymers.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg (OH)₂, boehmite, and a combination thereof, but it is not limited thereto.

The organic material and the inorganic material may be mixed and present in a single coating layer, or a coating layer including the organic material and a coating layer including the inorganic material may be present in a laminated form.

The first electrode 110, the separator 130, and the second electrode 120 are sequentially laminated in the first direction X and wound in a jelly roll shape centered on (e.g., around) a winding (or wound) axis WA extending in a second direction (e.g., the Y direction) crossing (or intersecting) the first direction X.

For example, the first direction X may be the horizontal direction, but it is not limited thereto. The second direction Y may be the vertical direction, but it is not limited thereto.

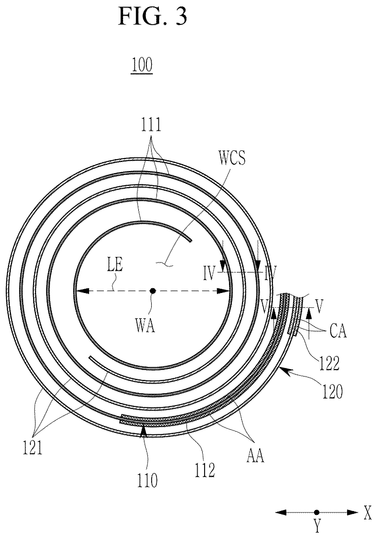

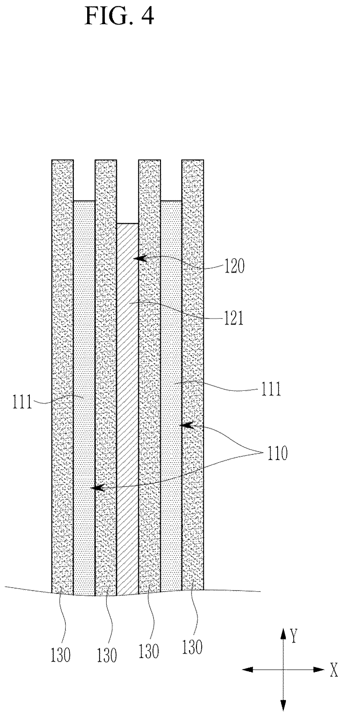

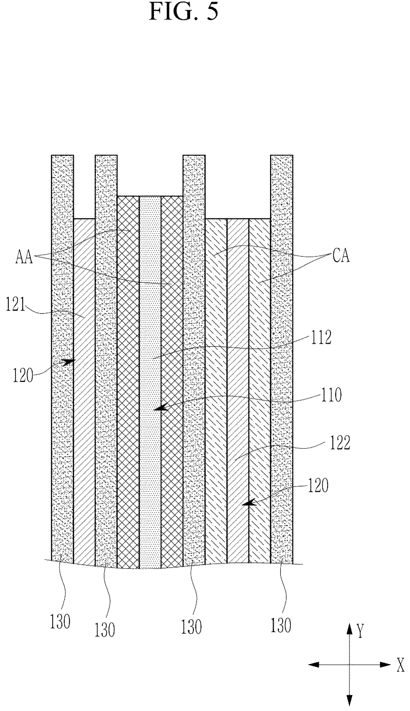

FIG. 3 is a top plan view of an electrode assembly of a button battery according to an embodiment viewed in a second direction. In FIG. 3, the separator positioned between the first electrode and the second electrode is not shown for convenience. FIG. 4 is a cross-sectional view taken along the line IV-IV in FIG. 3. FIG. 5 is a cross-sectional view taken along the line V-V in FIG. 3.

Referring to FIG. 3 to FIG. 5, the first electrode 110 has a band (or strip) shape with a first front uncoated region 111, which is an uncoated region of (e.g., a region not coated with a negative active material AA on) a negative current collector of a metal foil (e.g., a Cu foil), and a first coated region 112 where the negative active material AA is coated on the negative current collector.

The first front uncoated region 111 is adjacent to the winding axis WA in the first direction X and surrounds (e.g., extends around) the winding axis WA by at least two turns. For example, the first front uncoated region 111 may surround (or extend around) the winding axis WA by at least 2 turns.

The first front uncoated region 111 includes the negative current collector where it is uncoated with (or not coated by) the negative active material AA. The separator 130 is positioned between the first front uncoated region 111 and the second front uncoated region 121 of the second electrode 120. The first front uncoated region 111 protrudes in the second direction Y relative to the second front uncoated region 121 of the second electrode 120. The first front uncoated region 111 surrounds the winding axis WA, and a winding core space WCS surrounded by the first front uncoated region 111 is positioned on (or along) the winding axis WA. A length LE of the first direction X of the winding core space WCS may be proportional to the size of the space surrounded by the first front uncoated region 111, but it is not limited thereto. The front edge of the first front uncoated region 111 may be adjacent to the winding axis WA, and the first coated region 112 may be positioned at the rear edge of the first front uncoated region 111.

The first coated region 112 may extend from the first front uncoated region 111 and may be adjacent to the second front uncoated region 121 of the second electrode 120 in the first direction X. The first coated region 112 may be adjacent to the second front uncoated region 121 in the first direction X and may surround the second front uncoated region 121.

The first coated region 112 is where a negative current collector is coated with the negative active material AA. The first coated region 112 may include the negative active material AA coated on the negative current collector. The negative active material AA included in the first coated region 112 may include the negative active material described above, but it is not limited thereto and may include various suitable negative active materials. The separator 130 is positioned between the first coated region 112 and the second front uncoated region 121 of the second electrode 120. The separator 130 is positioned between the first coated region 112 and the second coated region 122 of the second electrode 120. The first coated region 112 protrudes in the second direction Y relative to the second front uncoated region 121 and the second coated region 122 of the second electrode 120. The front edge of the first coated region 112 may extend from the first front uncoated region 111, and the rear uncoated region may be positioned at the rear edge of the first coated region 112.

The second electrode 120 may be positioned on the first electrode 110 in the first direction X. The second electrode 120 may be separated from the first electrode 110 in the first direction X with the separator 130 therebetween. The second electrode 120 has a band (or strip) shape and has a second front uncoated region 121, which is a region where the positive current collector of the metal foil (e.g., Al foil) is not coated with a positive active material CA, and a second coated region 122, which is an area where the positive active material CA is coated on the positive current collector.

The second front uncoated region 121 is adjacent to the first front uncoated region 111 in the first direction X and surrounds the winding axis WA by at least two turns. The second front uncoated region 121 surrounds the first front uncoated region 111 by at least two turns. For example, the second front uncoated region 121 may surround the first front uncoated region 111 by at least two turns.

The second front uncoated region 121 is an area of the positive current collector not coated with the positive active material CA. The separator 130 is positioned between the second front uncoated region 121 and the first front uncoated region 111 of the first electrode 110. The separator 130 is positioned between the second front uncoated region 121 and the first coated region 112 of the first electrode 110. The second front uncoated region 121 is recessed relative to the first front uncoated region 111 of the first electrode 110 in a second direction Y. The second front uncoated region 121 surrounds the first front uncoated region 111, which surrounds the winding axis WA. The leading edge of the second front uncoated region 121 may be positioned between the first front uncoated region 111 surrounding the winding axis WA by one turn and the first front uncoated region 111 surrounding the winding axis WA by two turns, and the second coated region 122 may be positioned at the rear edge of the second front uncoated region 121.

The second coated region 122 may extend from the second front uncoated region 121 and may be adjacent to the first coated region 112 of the first electrode 110 in the first direction X. The second coated region 122 may be adjacent to the first coated region 112 in the first direction X and may surround the first coated region 112.

The second coated region 122 is an area of the positive current collector that is coated with the positive active material CA. The second coated region 122 may include the positive active material CA coated on the positive current collector. The positive active material CA included in the second coated region 122 may include the positive active material described above, but it is not limited thereto and may include various suitable positive active materials. For example, the positive active material CA may include nickel cobalt aluminum (NCA), which has a higher energy density than lithium cobalt oxide (LCO). The separator 130 is positioned between the second coated region 122 and the first coated region 112. The second coated region 122 is recessed in the second direction Y compared to the first front uncoated region 111 and the first coated region 112 of the first electrode 110. The leading edge of the second coated region 122 may extend from the second front uncoated region 121, and the rear uncoated region may be positioned at the trailing edge of the second coated region 122.

The separator 130 is positioned between the first electrode 110 and the second electrode 120 in the first direction X to prevent a short circuit between the first electrode 110 and the second electrode 120. The separator 130 may be positioned between one of the first front uncoated region 111 and the first coated region 112 of the first electrode 110 and one of the second front uncoated region 121 and the second coated region 122 of the second electrode 120 in the first direction X. The separator 130 may be positioned between the first front uncoated region 111 and the second front uncoated region 121 in the first direction X. The separator 130 may be positioned between the second front uncoated region 121 and the first coated region 112 in the first direction X. The separator 130 may be positioned between the first coated region 112 and the second coated region 122 in the first direction X. The separator 130 may protrude in the second direction Y relative to the first front uncoated region 111 and the second front uncoated region 121. The separator 130 may protrude in the second direction Y relative to the first coated region 112 and the second coated region 122.

Referring to FIG. 2 and FIG. 3, the winding core space WCS is positioned on the winding axis WA. The winding core space WCS is adjacent to the first front uncoated region 111 of the first electrode 110 and is surrounded by the first front uncoated region 111. The length LE of the winding core space WCS in the first direction X may be proportional to the size of the space surrounded by the first front uncoated region 111, but it is not limited thereto. For example, the length LE of the winding core space WCS may be in a range of about 1.8 mm to about 2.4 mm in the first direction X, but it is not limited thereto. For example, the length LE of the winding core space WCS may be about 2 mm in the first direction X.

For example, the diameter of the electrode assembly 100 where the winding core space WCS is positioned at the center in the first direction X may be greater than the height of the electrode assembly 100 in the second direction Y. The diameter of the electrode assembly 100 where the winding core space WCS is positioned at the center, in the first direction X may be larger than the height of the electrode assembly 100 in the second direction Y. The diameter DI of the button battery 1000, which houses (or accommodates) the electrode assembly 100 including the winding core space WCS in the internal space IS, in the first direction X may be greater than or equal to the height HE of the button battery 1000 in the second direction Y. The diameter DI of the button battery 1000 in the first direction X may be greater than the height HE of the button battery 1000 in the second direction Y. The length LE of the winding core space WCS may be in a range of about 15% to about 20% of the diameter DI of the button battery 1000 in the first direction X. If the diameter DI of the first direction X of the button battery 1000 has is about 12 mm, the length LE of the winding core space WCS may be about 2 mm in the first direction X.

For example, the winding core space WCS may be a space where various mandrels used (or present) during the winding of the electrode assembly 100 are positioned, but it is not limited thereto. The winding core space WCS may be (or may include) various known center pins positioned penetrating the winding core space WCS in the second direction Y, and such center pins may support the first electrode tab 140 and the second electrode tab 150 but are not limited thereto.

Referring to FIG. 2, the first electrode tab 140 extends from the first electrode 110 of the electrode assembly 100 to the case 200. For example, the first electrode tab 140 may be a tab that integrally extends from the first electrode 110 and is at least partially cut or may be a tab attached to the first electrode 110 and extending therefrom. The first electrode tab 140 may be connected to the rear uncoated region of the first electrode 110 or may extend from the rear uncoated region of the first electrode 110. The first electrode tab 140 is joined to the bottom of the case 200 and connects the first electrode 110 and the case 200. The first electrode tab 140 is in contact with the first electrode 110 and the case 200. The first electrode tab 140 is welded to the bottom of the case 200, but it is not limited thereto, and the first electrode tab 140 may come into contact with the bottom of the case 200. Due to the first electrode tab 140, the case 200 and the cap plate 300 have the same polarity as the first electrode 110.

The second electrode tab 150 extends from the second electrode 120 of the electrode assembly 100 to the terminal plate 400. For example, the second electrode tab 150 may be at least a partially cut tab that integrally extends from the second electrode 120 or may be a tab attached to and extending from the second electrode 120. The second electrode tab 150 may be connected to the rear uncoated region of the second electrode 120 or may extend from the rear uncoated region of the second electrode 120. The second electrode tab 150 is coupled with a protruding portion 420 of the terminal plate 400 to connect the second electrode 120 and the terminal plate 400. The second electrode tab 150 is in contact with the second electrode 120 and the terminal plate 400. The second electrode tab 150 is welded to the surface of the bottom of the protruding portion 420 of the terminal plate 400, but it is not limited thereto and may come into contact with the surface of the protruding portion 420. Due to the second electrode tab 150, the terminal plate 400 has the same polarity as the second electrode 120.

For example, a center pin penetrating (or extending through) the winding core space WCS of the electrode assembly 100 in the second direction Y may be positioned in the winding core space WCS at the center of the electrode assembly 100, and the center pin may support the first electrode tab 140 and the second electrode tab 150, but it is not limited thereto.

The case 200 is connected to the first electrode 110 of the electrode assembly 100 and accommodates the electrode assembly 100 in the internal space IS. The case 200 has an opening 210 exposing the upper portion of the electrode assembly 100. The first electrode tab 140 is welded to the bottom of the case 200 and is connected to the first electrode 110 of the electrode assembly 100 so that the case 200 has the same polarity as the first electrode 110. The case 200 has a cylindrical can shape that houses (or accommodates) the jelly roll-shaped electrode assembly 100, but it is not limited thereto and may have various known shapes. The case 200 may accommodate various suitable electrolytes together with the electrode assembly 100. The outer surface of the case 200 and the outer surface of the cap plate 300 may be (or may form) the first electrode terminals of the button battery 1000 but are not limited thereto. The upper surface of a flange portion 410, which is an outer surface of the terminal plate 400, may be (or may form) the second electrode terminal of the button battery 1000, but it is not limited thereto. A plating layer may be coated on the outer surface of the case 200, but it is not limited thereto, and various known coating layers may be coated on the outer surface of the case 200. The case 200 may include stainless steel, but it is not limited thereto and may include various suitable metals.

The opening 210 in the case 200 is covered by (e.g., sealed by) the cap plate 300 and the terminal plate 400.

The cap plate 300 is combined with the case 200 to cover the outer region of the opening 210. The cap plate 300 has a penetration hole (e.g., an opening) 310 exposing the central region of the opening 210. The cap plate 300 is directly joined to the sidewall of the case 200, which forms the opening 210 of the case 200, by a welding process, etc., and covers the outer region of the opening 210. The cap plate 300 has a ring shape due to the penetration hole 310 formed in the center, but it is not limited thereto. The cap plate 300 is combined with the case 200 and has the same polarity as the first electrode 110. Accordingly, the cap plate 300 and the case 200 have the same polarity as the first electrode 110. The outer surface of the cap plate 300 may be the first electrode terminal of the button battery 1000, but it is not limited thereto. The cap plate 300 may be joined to the terminal plate 400 with the insulation layer 500 therebetween. The junction between the cap plate 300 and the terminal plate 400 may be made by the insulation layer 500. The cap plate 300 may include stainless steel, but it is not limited thereto and may include various suitable metals

The terminal plate 400 is connected to the second electrode 120 and joined with the cap plate 300. The junction between the cap plate 300 and the terminal plate 400 may be made by the insulation layer 500. The terminal plate 400 covers the penetration hole 310 in the cap plate 300. The terminal plate 400 is positioned on the cap plate 300. The terminal plate 400 covers the central region of the opening 210 in the case 200, which is exposed by the penetration hole 310 in the cap plate 300. Because the terminal plate 400 covers the central region of the opening 210 and the cap plate 300 covers the outer region of the opening 210, the opening 210 in the case 200 is completely covered by the terminal plate 400 and the cap plate 300. The terminal plate 400 securely seals the electrode assembly 100 together with the case 200, the cap plate 300, and the insulation layer 500. The terminal plate 400 is coupled with the second electrode tab 150 of the electrode assembly 100 and is connected to the second electrode 120 of the electrode assembly 100. The terminal plate 400 has the same polarity as the second electrode 120.

The terminal plate 400 includes the flange portion 410 and the protruding portion 420.

The flange portion 410 is positioned on the cap plate 300 and overlaps the cap plate 300 to cover the penetration hole 310. The flange portion 410 has a wider area than the protruding portion 420. The flange portion 410 may have a larger diameter than the protruding portion 420. The flange portion 410 is thinner than the protruding portion 420, but it is not limited thereto. The rear surface of the flange portion 410 is in contact with the insulation layer 500, and the flange portion 410 is coupled with the cap plate 300. The junction between the flange portion 410 and the cap plate 300 may be made by the insulation layer 500. The front surface of the flange portion 410 may be the second electrode terminal of the button battery 1000. The back surface of the flange portion 410 may be the back surface of the terminal plate 400.

The protruding portion 420 may protrude from the flange portion 410 at the center of the terminal plate 400 to the penetration hole 310 and may penetrate (e.g., may extend through) the penetration hole 310. For example, the protruding portion 420 may be recessed from the flange portion 410 in the direction of the penetration hole 310 and may penetrate the penetration hole 310, but it is not limited thereto, and the protruding portion 420 may be recessed from the flange portion 410 in the direction of the penetration hole 310 and may be positioned within the penetration hole 310. The protruding portion 420 is connected to the second electrode 120 through the penetration hole 310 from the flange portion 410. The surface of the protruding portion 420 is joined to the second electrode tab 150. The surface of the protruding portion 420 may be welded to the second electrode tab 150, but it is not limited thereto. By joining the protruding portion 420 with the second electrode tab 150, the protruding portion 420 and the flange portion 410 of the terminal plate 400 have the same polarity as the second electrode 120. The surface of the protruding portion 420 combined with the second electrode tab 150 may have a smaller diameter than the front surface of the flange portion 410, which may be the electrode terminal. The protruding portion 420 and the flange portion 410 are integrally formed by using a forging processing, etc., but are not limited thereto and different materials may be combined to form the terminal plate 400.

The outer surface of the terminal plate 400 may be coated with a plating layer, but it is not limited thereto, and various known coating layers may be coated on the outer surface of the terminal plate 400. The terminal plate 400 may include at least one of stainless steel and aluminum, but it is not limited thereto, and may include various known metals.

The insulation layer 500 is positioned between the cap plate 300 and the flange portion 410 of the terminal plate 400. The insulation layer 500 joins the cap plate 300 and the terminal plate 400. The junction between the cap plate 300 and the terminal plate 400 may be made by the insulation layer 500. The insulation layer 500 includes an insulating material and insulates between the cap plate 300 and the terminal plate 400. The insulation layer 500 is thermally fused between the cap plate 300 and the flange portion 410 of the terminal plate 400 y using heat or a laser beam, etc. The insulation layer 500 includes polypropylene resin, but it is not limited thereto, and may include various suitable resins that insulate the cap plate 300 and the terminal plate 400 from each other. By joining the cap plate 300 and the terminal plate 400 with the insulation layer 500 therebetween, the opening 210 in the case 200 in which the electrode assembly 100 is accommodated is completely sealed by the cap plate 300, the terminal plate 400, and the insulation layer 500.

For example, the insulation layer 500 may include thermosetting resin and thermoplastic resin. The thermosetting resin and thermoplastic resin of the insulation layer 500 may be laminated in a plurality of layers, but the present disclosure is not limited thereto. The thermosetting resin of the insulation layer 500 is cured by heat and may include various suitable thermosetting resins, such as a phenol resin, a urea resin, a melamine resin, an epoxy resin, and a polyester resin. The thermoplastic resin of the insulation layer 500 includes a polypropylene resin that melts at a reference (or predetermined) temperature, but it is not limited thereto, and may include various suitable thermoplastic resins, such as polystyrene, polyethylene, and a polyvinyl chloride resin.

The insulation layer 500 is completely covered in the vertical direction, which is the thickness direction of the button battery 1000, by the terminal plate 400 between the cap plate 300 and the terminal plate 400, but it is not limited thereto, and the insulation layer 500 may protrude in the horizontal direction, which is the diameter direction of the button battery 1000, from the edge of the terminal plate 400 between the cap plate 300 and the terminal plate 400.

A washer 600 may be positioned on the back surface (e.g., a lower surface) of the cap plate 300. The washer 600 may face the electrode assembly 100 on the back of the cap plate 300. The washer 600 may include a single insulation layer or a plurality of insulation layers. When the washer 600 includes a plurality of insulation layers, one insulation layer in contact with the cap plate 300 may include a resin having higher adhesion than other insulation layers spaced apart from the cap plate 300, but it is not limited thereto. By positioning the washer 600 on the back surface of the cap plate 300, the second electrode tab 150 and the electrode assembly 100 may be prevented from being short circuited with the cap plate 300. The washer 600 may include polypropylene resin, but it is not limited thereto and may include various suitable resins, such as polystyrene, polyethylene, polychloride vinyl resin, etc.

The button battery 1000, according to one embodiment, is prevented from generating a flame or exploding even if the first electrode 110, which is the negative electrode, and the second electrode 120, which is the positive electrode, of the electrode assembly 100 are short circuited, when, for stability evaluation, a compression evaluation is performed in which the charged button battery 1000 in the second direction Y reaches a reference (or set) pressure or the button battery 1000 is deformed in the first direction X by a reference (or predetermined) ratio.

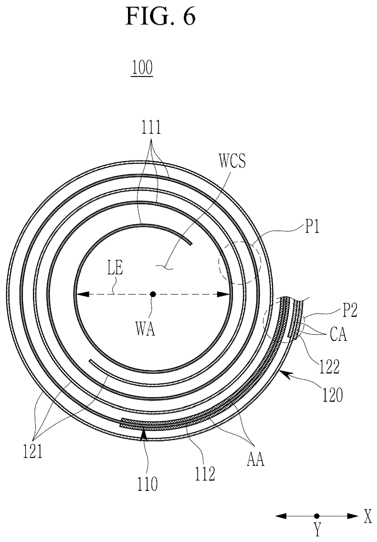

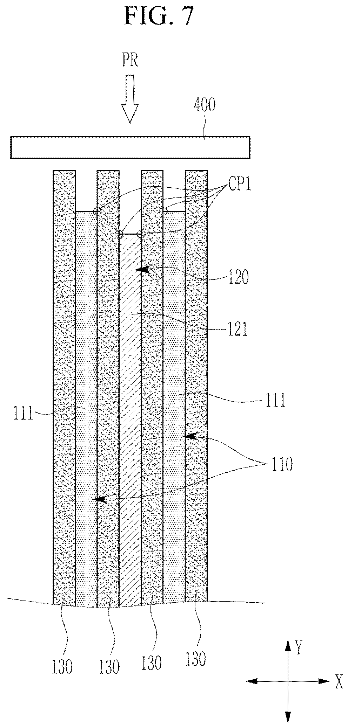

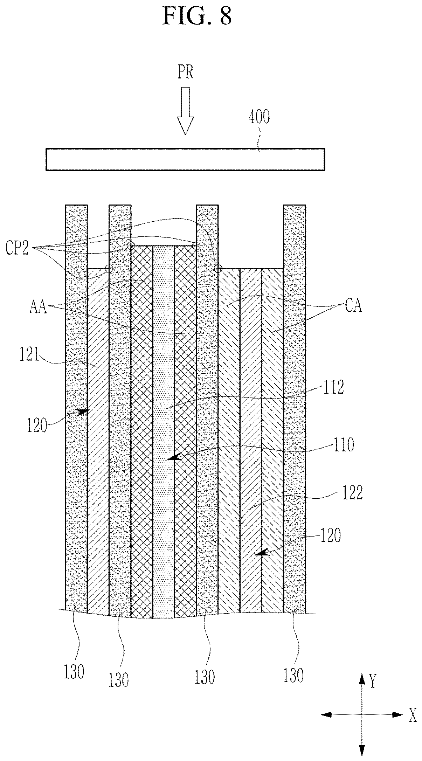

FIG. 6 is a top plan view illustrating an electrode assembly of a button battery according to an embodiment during a compression evaluation. FIG. 7 is a cross-sectional view showing a first point portion shown in FIG. 6. FIG. 8 is a cross-sectional view showing a second point portion shown in FIG. 6.

Referring to FIG. 6 to FIG. 8, when the compression evaluation of the charged button battery is performed and the button battery is pressurized in the second direction Y, because the button battery is deformed by the pressure PR, the electrode assembly 100 in the form of the jelly roll housed inside the button battery is deformed by being pressed in the second direction Y by at least one of the terminal plate 400 and the cap plate 300, a short circuit may occur between the first electrode 110 and the second electrode 120 of the electrode assembly 100.

For example, referring to FIG. 6 and FIG. 7, when evaluating the compression of the charged button battery, if there is a short circuit between the first electrode 110 and the second electrode 120 of the electrode assembly 100, because the first front uncoated region 111 of the first electrode 110 surrounds the winding axis WA of the electrode assembly 100 by at least two turns, the first front uncoated region 111 of the first electrode 110 and the second front uncoated region 121 of the second electrode 120, which are adjacent in the first direction X at the first point P1 of the electrode assembly 100, may be short circuited at a first contact point CP1 so that electrons move from the first front uncoated region 111 to the second front uncoated region 121, thereby reducing the charge of the electrode assembly 100. Because the negative active material and the positive active material are not present at the first front uncoated region 111 and the second front uncoated region 121, respectively, only electrons move without the movement of lithium ions at the first contact point CP1 between the first front uncoated region 111 and the second front uncoated region 121; thus, the amount of heat generated at the first contact point CP1 is small, and no flame or explosion occurs at the first contact point CP1 while electrons move from the first front uncoated region 111 to the second front uncoated region 121 to reduce the charge amount of the electrode assembly 100.

For example, referring to FIG. 6 to FIG. 8, when evaluating the compression of the charged button battery, if there is a short circuit between the first electrode 110 and the second electrode 120 of the electrode assembly 100, because the first front uncoated region 111 of the first electrode 110 surrounds the winding axis WA of the electrode assembly 100 by at least two turns, the first coated region 112 of the first electrode 110 and the second coated region 122 of the second electrode 120, which are adjacent in the first direction X at the second point P2 of the electrode assembly 100, are short circuited at the second contact point CP2, even if lithium ions move from the negative active material AA of the first coated region 112 to the positive active material CA of the second coated region 122, and electrons move from the first electrode 110 to the second electrode 120 at the same time, because the electrons move from the first front uncoated region 111 to the second front uncoated region 121 at the first point P1 described above, the charge of the electrode assembly 100 decreases, the amount of heat generated at the second contact point CP2 is small, the occurrence of a flame or explosion at the second contact point CP2 is prevented.

As another example, referring to FIG. 6 to FIG. 8, when evaluating the compression of the charged button battery, if there is a short circuit between the first electrode 110 and the second electrode 120 of the electrode assembly 100, because the first front uncoated region 111 of the first electrode 110 and the second front uncoated region 121 of the second electrode 120 surround the winding axis WA of the electrode assembly 100 by at least two turns, the first front uncoated region 111 of the first electrode 110 and the second front uncoated region 121 of the second electrode 120, which are adjacent in the first direction X at the first point P1 of the electrode assembly 100, are short circuited at the first contact point CP1, electrons move from the first front uncoated region 111 to the second front uncoated region 121, thereby reducing the charge amount of the electrode assembly 100. Because the negative active material and the positive active material are not present at the first front uncoated region 111 and the second front uncoated region 121, respectively, only electrons move without the movement of lithium ions at the first contact point CP1 between the first front uncoated region 111 and the second front uncoated region 121, such that the amount of heat generated at the first contact point CP1 is small, no flame or explosion occurs at the first contact point CP1, and electrons move from the first front uncoated region 111 to the second front uncoated region 121 to reduce the charge amount of the electrode assembly 100.

When evaluating the compression of the charged button battery, if there is a short circuit between the first electrode 110 and the second electrode 120 of the electrode assembly 100, because the first front uncoated region 111 of the first electrode 110 and the second front uncoated region 121 of the second electrode 120 surround the winding axis WA of the electrode assembly 100 by at least two turns, the first coated region 112 of the first electrode 110 and the second coated region 122 of the second electrode 120, which are adjacent in the first direction X at the second point P2 of the electrode assembly 100, are short circuited at the second contact point CP2, even if lithium ions move from the negative active material AA of the first coated region 112 to the positive active material CA of the second coated region 122, and electrons move from the first electrode 110 to the second electrode 120 at the same time, the charge of the electrode assembly 100 is reduced by the movement of electrons from the first front uncoated region 111 to the second front uncoated region 121 at the first point P1 described above, the amount of heat generated at the second contact point CP2 is small, and, thus, the occurrence of a flame or explosion at the second contact point CP2 is prevented.

As another example, when evaluating the compression of the charged button battery, if there is a short circuit between the first electrode 110 and the second electrode 120 of the electrode assembly 100, because the first front uncoated region 111 of the first electrode 110 and the second front uncoated region 121 of the second electrode 120 surround the winding axis WA of the electrode assembly 100 by at least two turns, the first coated region 112 of the first electrode 110 and the second coated region 122 of the second electrode 120, which are adjacent in the first direction X at the second point P2 of the electrode assembly 100, are short circuited at the second contact point CP2, even if lithium ions move from the negative active material AA of the first coated region 112 to the positive active material CA of the second coated region 122, and electrons move from the first electrode 110 to the second electrode 120 at the same time, and the positive active material CA includes NCA, which has a higher energy density than the LCO, because the charge of the electrode assembly 100 is reduced by the movement of electrons from the first front uncoated region 111 to the second front uncoated region 121 at the first point P1 described above, the amount of heat generated at the second contact point CP2 is small, and thus, the occurrence of a flame or explosion at the second contact point CP2 is prevented.

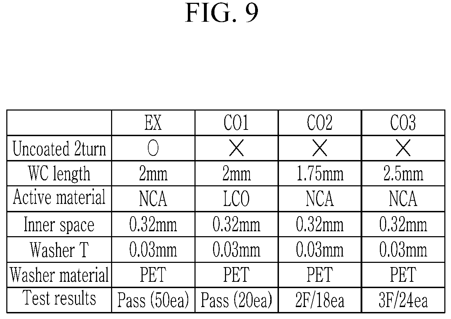

Below, an experimental example is described to confirm the effect of the button battery according to an embodiment with reference to FIG. 9.

FIG. 9 is a table showing compression evaluation results of experimental examples and comparative examples.

Referring to FIG. 9, the button battery according to the experimental example EX has a diameter of 12 mm. The jelly roll-shaped electrode assembly housed inside the button battery has the first front uncoated region of the first electrode and the second front uncoated region of the second electrode surrounding the wound axis of the electrode assembly by two turns (Uncoated 2 turns). The length (WC length) of the winding core space of the electrode assembly is 2 mm in the horizontal direction. The positive active material (Active material) of the electrode assembly includes nickel cobalt aluminum (NCA). The inner space (Inner space) of the button battery has a thickness of 0.32 mm in the vertical direction, excluding the thickness of the electrode assembly in the vertical direction. The thickness (Washer T) of the washer positioned on the back surface of the cap plate of the button battery is 0.03 mm. The material of the washer (Washer material) includes polyethylene terephthalate (PET).

To evaluate the stability of each button battery according to an experimental example EX, a compression test including compressing the charged button battery in the vertical direction, which is the thickness direction, until the pressure applied to the button battery reaches a reference (or predetermined) pressure or the button battery is deformed by a reference (or predetermined) ratio in the diameter direction was performed. For example, in the compression test, the reference (or predetermined) pressure may be in a range of 10 kN to 16 kN, but it is not limited thereto, and the reference (or predetermined) ratio may be in a range of 105% to 115% of the initial diameter of the button battery, but it is not limited thereto.

After evaluating the compression of 50 button batteries in the vertical direction according to the experimental example EX, no flame or explosion occurred in the 50 button batteries.

In the button battery according to Comparative Example 1 CO1 compared to the button battery according to the experimental example EX, the first front uncoated region of the first electrode and the second front uncoated region of the second electrode of the jelly roll-shaped electrode assembly housed inside the button battery do not surround the wound axis of the electrode assembly by two turns (Uncoated 2 turns). The positive active material (Active material) of the electrode assembly includes lithium cobalt oxide (LCO).

As a result of evaluating the compression of the 20 button batteries in the vertical direction according to Comparative Example 1 CO1, no flame or explosion occurred in the 20 button batteries.

As confirmed in the experimental example EX and Comparative Example 1 CO1, if a short circuit occurs between the first and second electrodes of the electrode assembly during the compression evaluation of the charged button battery, because the first front uncoated region of the first electrode and the second front uncoated region of the second electrode surround the winding axis of the electrode assembly by at least two turns, the occurrence of a flame or explosion in the button battery was prevented because electrons moved from the first front uncoated region to the second front uncoated region, thereby reducing the charge of the electrode assembly, even if the positive active material includes the NCA having a higher energy density than the LCO.

In comparison to the button battery according to the experimental example EX, the button battery according to Comparative Example 2 CO2 has the first front uncoated region of the first electrode and the second front uncoated region of the second electrode of the jelly roll-shaped electrode assembly housed inside the button battery not surrounding the winding axis of the electrode assembly by two turns (Uncoated 2 turns). The length (WC length) of the winding core space of the electrode assembly is 1.75 mm in the horizontal direction.

As a result of evaluating the compression of 18 button batteries in the vertical direction according to Comparative Example 2 CO2, flames or explosions occurred in two of the 18 button batteries.

In comparison to the button battery according to the experimental example EX, the button battery according to Comparative Example 3 CO3 has the first front uncoated region of the first electrode and the second front uncoated region of the second electrode of the jelly roll-shaped electrode assembly housed inside the button battery not surrounding the winding axis of the electrode assembly by 2 turns (Uncoated 2 turns). The length (WC length) of the winding core space of the electrode assembly is 2.5 mm in the horizontal direction.

As a result of evaluating the compression of 24 button batteries in the vertical direction according to Comparative Example 3 CO3, flames or explosions occurred in three of the 24 button batteries.

As a result of checking the experimental example EX and Comparative Example 2 CO2 and the Comparative Example 3 CO3, if a short circuit occurs between the first and second electrodes of the electrode assembly during the compression evaluation of the charged button battery, because the first front uncoated region of the first electrode and the second front uncoated region of the second electrode surround the winding axis of the electrode assembly by at least two turns in the experimental example EX, it was confirmed that even though the first coated region of the first electrode and the second coated region of the second electrode of the electrode assembly were short circuited, lithium ions moved from the negative active material of the first coated region to the positive active material of the second coated region simultaneously while electrons moved from the first electrode to the second electrode, and the charge amount of the electrode assembly was reduced due to electrons moving from the first front uncoated region to the second front uncoated region, such that the occurrence of a flame or explosion in the button battery was prevented.

As a result of checking the experimental example EX and the Comparative Example 2 CO2 and the Comparative Example 3 CO3, if a short circuit occurs between the first and second electrodes of the electrode assembly during the compression evaluation of the charged button battery, because the first front uncoated region of the first electrode and the second front uncoated region of the second electrode each surround the winding axis of the electrode assembly by at least two turns and the winding core space of the electrode assembly has a length ranging from 1.8 mm to 2.4 mm in the first direction including the horizontal direction, it was confirmed that even though the first coated region of the first electrode and the second coated region of the second electrode of the electrode assembly were short circuited such that lithium ions moved from the negative active material of the first coated region to the positive active material of the second coated region simultaneously while electrons moved from the first electrode to the second electrode, the charge amount of the electrode assembly was reduced due to electrons moving from the first front uncoated region to the second front uncoated region, whereby the occurrence of a flame or explosion in the button battery was prevented.

As a result of checking the experimental example EX and Comparative Example 2 CO2 and Comparative Example 3 CO3, it was confirmed that the numerical limitation of the electrode assembly having the winding core space with a length in a range of 1.8 mm to 2.4 mm in the first direction, in which the first front uncoated region of the first electrode and the second front uncoated region of the second electrode simultaneously surround the winding axis of the electrode assembly by at least two turns, has a threshold significance in preventing the occurrence of a flame or explosion in the button battery during the compression evaluation.

As a result of checking the experimental example EX and Comparative Example 2 CO2 and Comparative Example 3 CO3, it was confirmed that the numerical limitation of the button battery having the diameter of 12 mm in the first direction and the winding core space of the electrode assembly having the length of 1.8 mm to 2.4 mm in the first direction, in which the first front uncoated region of the first electrode and the second front uncoated region of the second electrode simultaneously surround the winding axis of the electrode assembly by at least two turns, has a threshold significance in suppressing the occurrence of a flame or explosion in the button battery during the compression evaluation. As a result of checking the experimental example EX and Comparative Example 2 CO2 and Comparative Example 3 CO3, it was confirmed that the numerical limitation of having the winding core space of the electrode assembly having the length of 15% (for example, 1.8 mm/12 mm) to 20% (for example, 2.4 mm/12 mm) in the first direction, in which the first front uncoated region of the first electrode and the second front uncoated region of the second electrode simultaneously surround the winding axis of the electrode assembly by at least two turns, has a threshold significance in suppressing the occurrence of a flame or explosion in the button battery during the compression evaluation.

The electrode assembly and the button battery including the same are provided in which the occurrence of a flame or explosion is prevented during the compression test of the button battery to evaluate the stability of the button battery.

While the present disclosure has been described in connection with what is presently considered to be practical embodiments, it is to be understood that the present disclosure is not limited to the disclosed embodiments, but, on the contrary, is intended to cover various modifications and equivalent arrangements included within the scope of the appended claims and their equivalents.

### Description of symbols

electrode assembly 100,
first electrode 110,
first front uncoated region 111,
second electrode 120,
second front uncoated region 121,
separator 130,
case 200,
cap plate 300,
terminal plate 400,
insulation layer 500,
washer 600

## Claims

1. An electrode assembly (100) comprising:
a first electrode (110);
a second electrode (120) on the first electrode (110) in a first direction (X); and
a separator (130) between the first electrode (110) and the second electrode (120),
wherein the first electrode (110), the second electrode (120), and the separator (130) are wound in a jelly roll shape about a winding axis (WA) extending in a second direction (Y) intersecting the first direction (X), and
wherein the first electrode (110) has a first front uncoated region (111) adjacent to the winding axis (WA) in the first direction (X) and extending around the winding axis (WA) by at least two turns.

2. The electrode assembly (100) as claimed in claim 1, wherein the second electrode (120) has a second front uncoated region (121) adjacent to the first front uncoated region (111) in the first direction (X) and extending around the first front uncoated region (111) by at least two turns.

3. The electrode assembly (100) as claimed in claim 2, wherein the first front uncoated region (111) protrudes beyond the second front uncoated region (121) in the second direction (Y).

4. The electrode assembly (100) as claimed in claim 2 or 3, wherein the separator (130) is between the first front uncoated region (111) and the second front uncoated region (121) in the first direction (X).

5. The electrode assembly (100) as claimed in any one of claims 2 to **4,** wherein the separator (130) protrudes beyond the first front uncoated region (111) in the second direction (Y).

6. The electrode assembly (100) as claimed in any one of claims 2 to 5, wherein the first electrode (110) has a first coated region (112) extending from the first front uncoated region (111) and adjacent to the second front uncoated region (121) in the first direction (X).

7. The electrode assembly (100) as claimed in claim 6, wherein the first coated region (112) comprises a negative active material.

8. The electrode assembly (100) as claimed in claim 6 or 7, wherein the second electrode (120) has a second coated region (122) extending from the second front uncoated region (121) and adjacent to the first coated region (112) in the first direction (X).

9. The electrode assembly (100) as claimed in claim 8, wherein the second coated region (122) comprises a positive active material.

10. The electrode assembly (100) as claimed in claim 9, wherein the positive active material comprises nickel cobalt aluminum.

11. The electrode assembly (100) as claimed in any one of the preceding claims, wherein a winding core space (WCS) is arranged on the winding axis (WA), adjacent to the first front uncoated region (111), and surrounded along its periphery by the first front uncoated region (111).

12. The electrode assembly (100) as claimed in claim 11, wherein a length (LE) of the winding core space (WCS) is in a range of 1.8 mm to 2.4 mm in the first direction (X).

13. The electrode assembly (100) as claimed in any one of the preceding claims, wherein a diameter of the electrode assembly (100) in the first direction (X) is greater than or equal to a height of the electrode assembly (100) in the second direction (Y).

14. A button battery (1000) comprising:
an electrode assembly (100) according to any one of the preceding claims;
a case (200) connected to the first electrode (110), accommodating the electrode assembly (100), and having an opening (210) exposing the electrode assembly (100);
a cap plate (300) covering an outer region of the opening (210) in the case (200) and having an opening (310) exposing a central region of the opening (210) in the case (200); and
a terminal plate (400) insulated from the cap plate (300), connected to the second electrode (120), and covering the opening (310) in the cap plate (300).

15. The button battery (1000) as claimed in claim 14, wherein a length (LE) of the winding core space (WCS) is in a range of 15% to 20% of a diameter of the button battery (1000) in the first direction (X).
